# EUROPÄISCHE PATENTSCHRIFT

(11) **EP 2 835 320 B1**
(45) Veröffentlichungstag und Bekanntmachung des Hinweises auf die Patenterteilung: **02.08.2017**
(21) Anmeldenummer: 14180327.0
(22) Anmeldetag: 08.08.2014
(51) Int. Cl.: B29L 31/00, B29C 45/14, B29C 65/00, B29C 65/02, B65D 65/46, B65D 8/00, B65D 1/22

(54) **Spritzguss Verfahren zum Herstellen einer Verpackung**
Injection moulding method for producing a packaging
Procédé de moulage par injection pour fabriquer un emballage

(30) Priorität: 10.08.2013 DE 102013108685
(43) Veröffentlichungstag der Anmeldung: 11.02.2015
(73) Patentinhaber: Coveris Rigid (Zell) Deutschland GmbH, 65856 Zell / Kaimt (DE)
(72) Erfinder:
(74) Vertreter: Hutzelmann, Gerhard

(56) Entgegenhaltungen:
- EP-A1- 0 659 649
- EP-A2- 2 213 350
- GB-A- 1 348 315
- GB-A- 1 360 801
- US-A- 3 836 063
- US-B1- 6 230 919

## Beschreibung

Die Erfindung bezieht sich auf ein Spritzguss Verfahren zum Herstellen einer Verpackung mit einem Behälterteil und/oder einem Deckel.

Werden derartige Verpackungen aus Papier bzw. Karton hergestellt, so müssen diese verhältnismäßig steif sein, um der Verpackung eine ausreichende Festigkeit zu geben.

Der Erfindung liegt die Aufgabe zugrunde, ein Spritzguss Verfahren zur Herstellen einer Verpackung zu schaffen, bei der auch dünnere Papier- bzw. Kartonlagen verwendet werden können.

Diese Aufgabe wird erfindungsgemäß dadurch gelöst, daß ein Rahmen aus Kunststoff vorgesehen ist, der mit einer Papier- bzw. Kartonlage verbunden ist.

Dabei bringt der Rahmen aus Kunststoff die notwendige Steifigkeit, während die Papier- bzw. Kartonlage die Dichtigkeit der Verpackung gewährleistet.

Als besonders vorteilhaft hat es sich dabei erwiesen, wenn gemäß einer weiteren Ausgestaltung der Erfindung wenigstens die Eckbereiche des Behälterteils bzw. des Deckels mit Rippen aus Kunststoff versehen sind.

Es ist im Rahmen der Erfindung jedoch auch möglich, daß innerhalb der Flächen der einzelnen Abschnitte des Behälters bzw. Deckels Versteifungsrippen aus Kunststoff vorgegehen sind.

Insbesondere bei größerflächigen Papier- bzw. Kartonabschnitten wird damit eine sehr gute Formbeständigkeit der Verpackung erzielt.

Als sehr vorteilhaft hat es sich auch erwiesen, wenn gemäß einer weiteren Ausgestaltung der Erfindung die Schnittkanten der Papier- bzw. Kartonlage von den Rippen bzw. Versteifungsrippen eingefaßt sind.

Damit ist gewährleistet, daß keine offenen Schnittkanten von Papier oder Karton vorhanden sind, die Fett oder andere Substanzen aus dem Füllgut aufnehmen könnten.

Zur weiteren Verbesserung der Standfestigkeit der erfindungsgemäßen Verpackung kann gemäß einer weiteren vorteilhaften Ausgestaltung vorgesehen sein, daß die Rippen wenigstens teilweise miteinander verbunden sind. Ein Vorteil der Erfindung ist dadurch gekennzeichnet, daß die Rippen aus Kunststoff, einem biologisch abbaubaren Kunststoff bzw. einem Kunststoff-Faser- Gemisch bestehen.

Eine vorteilhafte Ausgestaltung der Erfindung liegt auch darin, daß die Papier- bzw. Kartonlage dort eine Perforation aufweisen, wo die Versteifungsrippen vorgesehen sind.

Damit kann der Kunststoff beim Spritzen durch die Perforation hindurch dringen und sich mit der Gegenseite verbinden. Die Rippen werden nach ihrer

Herstellung mit den Papier- bzw. Kartonlagen verbunden werden.

Dabei hat es sich als besonders vorteilhaft erwiesen, wenn die Papier- bzw. Kartonlagen im vom Spritzvorgang noch klebrigen Zustand der Rippen mit diesen verbunden werden.

In der Zeichnung ist die Erfindung anhand von mehreren Ausführungsbeispielen veranschaulicht. Dabei zeigen:
- Fig.1: eine schaubildliche Darstellung eines Verpackungsbehälters mit an den Ecken vorgesehenen Kunststoffrippen,
- Fig.2: eine ebenfalls schaubildliche Darstellung eines weiteren Verpackungsbehälters mit weiteren, in den Flächen angeordneten Rippen und
- Fig.3: eine Deckel mit einem als Kunststoffrippe ausgebildeten Rand.

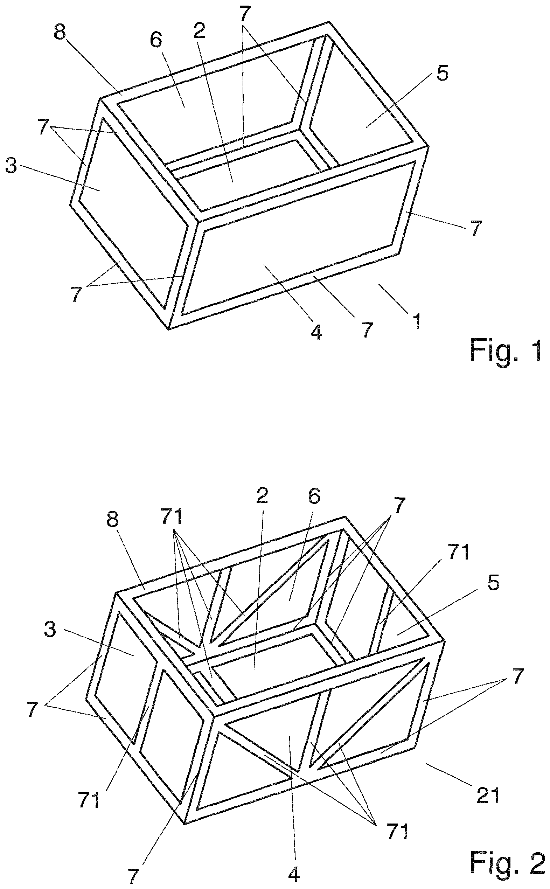

Mit 1 ist in Fig.1 ein Verpackungsbehälter bezeichnet, der aus einem Boden 2 und vier Seitenwänden 3, 4, 5 und 6 besteht. Sowohl der Boden 2 als auch die vier Seitenwände bestehen aus Karton und sind miteinander durch Kunststoff-Rippen 7 verbunden.

Der obere Rand des Verpackungsbehälters 2 wird ebenfalls durch eine KunststoffRippe 8 gebildet und kann so ausgebildet sein, daß er mit einem Deckel verbindbar ist.

Beim Verpackungsbehälter 21 nach Fig.2 sind zusätzlich zu den Kunststoff-Rippen 7 weitere Versteifungsrippen 71 vorgesehen, die mit den Kunststoff-Rippen 7 bzw. der Rippe 8 verbunden sind.

Die Seiten wände 3 bis 6 und auch der boden 2 können dadurch erheblich versteift werden, so dass als Material auch verhältnismäßig dünnes Papier eingesetzt werden kann.

Das Papiermaterial kann sich dabei von einer Rippe 7, 71, 8 zur nächsten erstrecken.

Es ist aber auch möglich, die Papierlagen über die ganze Wand reichen zu lassen und nur zusätzlich mit den Rippen 71 auszusteifen.

Hierbei können die Wandflächen mit einer Perforation versehen sein, um ein Durchtreten des Kunststoffes zu ermöglichen, wodurch die beidseitigen Rippen-Teile mit einander verbunden sind.

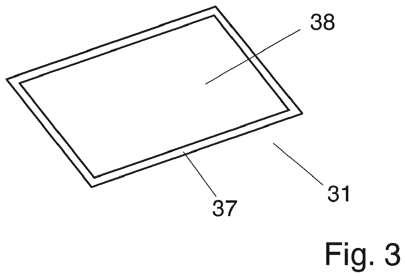

Bei dem in Fig. 3 dargestellten Deckel 31 ist lediglich der Umfangsrand 37 als Kunststoff-Rippe 37 ausgebildet, die entsprechend den Anforderungen zum Verschließen eines Behälters ausgebildet ist.

Auch hier können noch zusätzliche, nicht dargestellten Versteifungsrippen in unterschiedlichster Formgebung vorgesehen sein.

## Patentansprüche

1. Spritzguß-Verfahren zum Herstellen einer Verpackung mit einem Behälterteil und/oder einem Deckel, wobei ein aus Rippen gebildeter Rahmen aus Kunststoff vorgesehen ist, der mit einer Papier- bzw. Kartonlage verbunden ist, **dadurch gekennzeichnet, daß** die Rippen nach ihrer Herstellung mit Papier- bzw. Kartonlagen verbunden werden, wobei die Papier- bzw. Kartonlagen im vom Spritzvorgang noch klebrigen Zustand der Rippen mit diesen verbunden werden.

2. Verfahren nach Anspruch 1, **dadurch gekennzeichnet, daß** wenigstens die Eckbereiche des Behälterteils und/oder des Deckels mit Rippen aus Kunststoff versehen werden.

3. Verfahren nach Anspruch 1 oder 2, **dadurch gekennzeichnet, daß** innerhalb der Flächen der einzelnen Abschnitte des Behälters bzw. Deckels Versteifungsrippen aus Kunststoff vorgesehen werden.

4. Verfahren nach Anspruch 1, 2 oder 3, **dadurch gekennzeichnet, daß** die Schnittkanten der Papier- bzw. Kartonlagen von Rippen bzw. Versteifungsrippen eingefaßt werden.

5. Verfahren nach einem der vorangehenden Ansprüche, **dadurch gekennzeichnet, daß** die Rippen wenigstens teilweise miteinander verbunden werden.

6. Verfahren nach einem der vorangehenden Ansprüche, **dadurch gekennzeichnet, daß** die Rippen aus einem biologisch abbaubaren Kunststoff bzw. einem Kunststoff-Faser- Gemisch hergestellt werden.

7. Verfahren nach einem der vorangehenden Ansprüche, **dadurch gekennzeichnet, daß** die Papier- bzw. Kartonlagen dort mit einer Perforation versehen werden, wo Versteifungs-Rippen vorgesehen sind.

## Claims

1. Injection-moulding method for producing a package with a container part and/or a cover, wherein a plastics material frame formed from ribs and connected with a paper or cardboard layer is provided, **characterised in that** the ribs after production thereof are connected with paper or cardboard layers, the paper layers or cardboard layers being connected with the ribs in the state thereof in which they are still adhesive from the injection process.

2. Method according to claim 1, **characterised in that** at least the corner regions of the container part and/or the cover are provided with ribs of plastics material.

3. Method according to claim 2, **characterised in that** stiffening ribs of plastics material are provided within the surfaces of the individual sections of the container or cover,

4. Method according to claim 2 or 3, **characterised in that** the cut edges of the paper layers or cardboard layers are edged by ribs or stiffening ribs.

5. Method according to any one of the preceding claims, **characterised in that** the ribs are at least partly connected together.

6. Method according to any one of the preceding claims, **characterised in that** the ribs are made of a biologically degradable plastics material or a plastic/fibre mixture.

7. Method according to any one of the preceding claims, **characterised in that** the paper layers or cardboard layers are provided with a perforation where stiffening ribs are provided.

## Revendications

1. Procédé de moulage par injection destiné à la fabrication d'un emballage comprenant un récipient et/ou un couvercle, sachant qu'il est prévu un cadre en matière plastique constitué par des nervures et relié à une couche respective de papier ou de carton, **caractérisé par le fait que** les nervures sont reliées à des couches respectives de papier ou de carton, à l'issue de leur fabrication, lesquelles couches respectives de papier ou de carton sont reliées auxdites nervures lorsque ces dernières sont encore à l'état collant résultant du processus d'injection.

2. Procédé selon la revendication 1, **caractérisé par le fait qu'**au moins les zones d'angle du récipient, et/ou du couvercle, sont dotées de nervures en matière plastique.

3. Procédé selon la revendication 1 ou 2, **caractérisé par le fait que** des nervures de rigidification en matière plastique sont prévues à l'intérieur des surfaces des régions individuelles respectives du récipient ou du couvercle.

4. Procédé selon la revendication 1, 2 ou 3, **caractérisé par le fait que** les arêtes de coupe des couches respectives de papier ou de carton sont bordées, respectivement, par des nervures ou des nervures de rigidification.

5. Procédé selon l'une des revendications précédentes, **caractérisé par le fait que** les nervures sont reliées au moins partiellement les unes aux autres.

6. Procédé selon l'une des revendications précédentes, **caractérisé par le fait que** les nervures sont fabriquées en un matériau synthétique biodégradable ou, respectivement, en un mélange de matière plastique et de fibres.

7. Procédé selon l'une des revendications précédentes, **caractérisé par le fait que** les couches respectives de papier ou de carton sont munies d'une perforation aux emplacements auxquels des nervures de rigidification sont prévues.
